# EUROPÄISCHE PATENTSCHRIFT

(11) **EP 1 134 240 B1**
(45) Veröffentlichungstag und Bekanntmachung des Hinweises auf die Patenterteilung: **07.06.2006**
(21) Anmeldenummer: 01104629.9
(22) Anmeldetag: 23.02.2001
(51) Int. Cl.: C08F 220/12, C09D 5/02, C09J 157/00, C04B 26/04, C08F 212/08, C08F 222/10

(54) **Beschichtungszusammensetzung**
Coating composition
Composition de revêtement

(30) Priorität: 09.03.2000 DE 10011387
(43) Veröffentlichungstag der Anmeldung: 19.09.2001
(73) Patentinhaber: BASF Aktiengesellschaft, 67056 Ludwigshafen (DE)
(72) Erfinder: Kirsch, Stefan, Dr., 55262 Heidesheim (DE); Pföhler, Peter, Dr., 67373 Dudenhofen (DE); Schlarb, Bernhard, Dr., 67067 Ludwigshafen (DE); Dersch, Rolf, Dr., 67434 Neustadt (DE); Zhao, Cheng-Le, Dr., Charlotte, NC 28277 (US)

(56) Entgegenhaltungen:
- EP-A- 0 184 785
- EP-A- 0 501 666
- EP-A- 0 615 983
- WO-A-00/57433
- DE-A- 2 213 756
- DE-A- 19 845 999

## Beschreibung

Die vorliegende Erfindung betrifft geruchsarme, lösungsmittelfrei verarbeitbare Bindemittelpolymerisate, Beschichtungsmassen auf Basis dieser Bindemittelpolymerisate sowie deren Verwendung.

Zur Reduzierung der Umweltbelastung und aus arbeitshygienischen Gründen ist es wünschenswert, daß Beschichtungsmassen, insbesondere solche, die in geschlossenen Räumen verwendet werden, wie beispielsweise Dispersionsfarben, Kunststoffdispersionsputze, Dichtungsmassen oder Klebstoffe für keramische Fliesen, keine nichtwässrigen, flüchtigen, organischen oder anorganische Bestandteile an die Umgebung abgeben. Dies kann u.a. dadurch erreicht werden, daß man als Bindemittel für diese Beschichtungsmassen wässrige Polymerisatdispersionen verwendet.

Konventionelle Bindemittel auf Basis wässriger Polymerisatdispersionen enthalten jedoch in der Regel noch geringe Mengen an organischen Lösungsmitteln. Diese sind notwendig, um die Mindestfilmbildetemperatur (MFT) der Bindemittelpolymerisate zu verringern und so eine Verarbeitung der Beschichtungsmassen auch bei niedrigen Temperaturen zu gewährleisten. Auch kann die MFT der polymeren Bindemittel durch "innere Weichmachung", d.h. durch Herabsetzen der Glasübergangstemperatur (T_{g}) des Bindemittelpolymerisats verringert werden (siehe Ullmann's Encyclopaedia of Industrial Chemistry, VCH Weinheim, 1992, 5 Ed. Vol. A21, S. 169). Bei einer zu niedrigen MFT des polymeren Bindemittels besteht jedoch die Gefahr, daß die Beschichtungsmassen ein schlechtes Pigmentbindevermögen und keine ausreichende mechanische Festigkeit aufweisen sowie darüber hinaus leicht anschmutzen (siehe H. Rinno, Farbe + Lack, 1993, 99, Seiten 697 bis 704).

Aus Kostengründen ist es vorteilhaft, daß das polymere Bindemittel große Mengen an Pigmenten und Füllstoffen zu binden vermag. Dispersionsinnenfarben weisen beispielsweise Pigmentvolumenkonzentrationen [PVK, = (Pigment- und Füllstoffvolumen) x 100 / (Pigment- und Füllstoffvolumen plus Bindemittelvolumen); vgl. Ullmanns Enzyklopädie der Technischen Chemie, VCH Weinheim, 1978, 4. Aufl. Bd. 15, Seite 667] im Bereich von 50 bis 80 % auf. Wird die vom polymeren Bindemittel tolerierte PVK überschritten, weist die Beschichtungsmasse keine ausreichende Naßabriebfestigkeit auf. Nach H. Warson in 'Synthetic Resin Emulsions', E. Benn Ltd., London, 1972, Seiten 776 bis 777, weisen polymere Bindemittel dann eine hohe Pigmentbindekraft auf, wenn sie 1 bis 4 Gew.-%, Carboxylgruppen aufweisende Monomere einpolymerisiert enthalten. Bei hochwertigen polymeren Bindemitteln liegt der Gehalt an diesen Monomeren sogar zwischen 2,5 und 7 Gew.-%. Andererseits besteht bei einem zu hohen Säuregehalt die Gefahr, daß das Bindemittelpolymerisat zu wasserlöslich wird und somit die Naßabriebfestigkeit der Beschichtungsmassen abnimmt.

Die EP-A-652269 offenbart Bindemittel für emissionsarme Beschichtungsmassen, welche aus einem grobteiligen Latex mit Teilchengrößen im Bereich von 100 bis 500 nm und einem feinen Latex mit Teilchengrößen im Bereich von 5 bis 40 nm aufgebaut sind. Dabei können sowohl die grobteiligen als auch die feinteiligen Latexteilchen vernetzende Monomereinheiten enthalten. Die Verwendung von Bindemitteln aus zwei unabhängig voneinander hergestellten Polymerisatdispersionen ist für preiswerte Beschichtungsmassen zu aufwendig. Darüber hinaus liefern die beschriebenen Dispersionsfarben weder bei Verwendung eines Bindemittels aus grobteiliger und feinteiliger Polymerisatdispersion noch bei alleiniger Verwendung der grobteiligen Polymerisatdispersion Anstrichfilme mit zufriedenstellenden Abriebwerten.

In der EP-A-585156 wird als Bindemittel für wässrige Dispersionseine wässrige Acrylatdispersion offenbart. Zur Verbesserung der Abriebwerte von Farbanstrichen wird dem Bindemittel eine Epoxidharzdispersion in Mengen von 0,1 bis 4 Gew.% zugesetzt. Die verwendete Acrylatdispersion kann optional 0,1 bis 5 Gew.-% an Ethylenglykoldimethacrylat oder Dicyclopentadienylmethacrylat als ethylenisch ungesättigte Vernetzer enthalten. Die unter Verwendung der Acrylatdispersion erhaltenen Farbanstriche weisen ebenfalls keine zufriedenstellenden Abriebwerte auf. Darüber hinaus scheint der Einsatz von Epoxidkomponenten aufgrund ihrer Toxizität für die gewünschten Anwendungen wenig geeignet.

Die DE-A 19750618 offenbart pigmenthaltige Zubereitungen, die als Bindemittel ein phosphonatgruppenhaltiges Polymerisat enthalten. Optional kann dieses Polymerisat auch 0,1 bis 5 Gew.-% an vernetzenden Monomeren in einpolymerisierter Form enthalten.

In der EP-A-810274 werden emissionsarme Bindemittel für Beschichtungsmassen mit verbesserter Abriebfestigkeit offenbart. Die als Bindemittel verwendeten Polymerisate enthalten ≤ 1 Gew.-% eines carbonsäurehaltigen Comonomeren und weisen einen T_{g}-Wert ≤ 10°C auf. Zur Herstellung der Polymerisate werden jedoch keine vernetzenden Monomere eingesetzt.

Aufgabe der vorliegenden Erfindung war es, angesichts des vorstehenden Standes der Technik Beschichtungsmassen auf Basis verbesserter geruchsarmer, lösungsmittelfrei verarbeitbarer Bindemittel mit hohem Pigmentbindevermögen zur Verfügung zu stellen.

Demgemäß werden Beschichtungsmassen mit einer Pigment volumen konzentration von ≧ 70% zur Verfügung gestellt, die als Bindemittel wenigstens ein Polymerisat enthalten und dadurch gekennzeichnet sind, daß das wenigstens eine Polymerisat durch radikalisch initiierte wässrige Emulsionspolymerisation einer Mischung von ethylenisch ungesättigten Monomeren erhalten wird, die aus

| | |
|---|---|
| 45 bis 74,9 Gew.-% | wenigstens eines Monomeren, dessen Homopolymerisat eine Glasübergangstemperatur < 30°C aufweist (Monomere A), |
| 25 bis 54,9 Gew.-% | wenigstens eines Monomeren, dessen Homopolymerisat eine Glasübergangstemperatur > 50°C aufweist (Monomere B), |
| 0,001 bis 0,1 Gew.-% | wenigstens eines vernetzend wirkenden Monomeren mit wenigstens zwei nichtkonjugierten Vinylgruppen (Monomere C), und optional |
| 0 bis 4 Gew.-% | wenigstens eines säuregruppenhaltigen Monomeren (Monomere D) sowie |
| 0 bis 2 Gew.-% | wenigstens eines weiteren Monomeren (Monomere E), |

jeweils bezogen auf die Gesamtmenge der zur Polymerisation eingesetzten ethylenisch ungesättigten Monomeren, besteht.

Mit der Glasübergangstemperatur T_{g}, ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die T_{g} wird nach dem DSC-Verfahren ermittelt (Differential Scanning Calorimetry, 20 K/min, midpoint-Messung, DIN 53 765). Die T_{g}-Werte für die Homopolymerisate der meisten Monomeren sind bekannt und z.B. in Ullmann's Ecyclopedia of Industrial Chemistry, VCH Weinheim, 1992, 5. Auflage, Vol. A21, S. 169 aufgeführt; weitere Quellen für Glasübergangstemperaturen von Homopolymerisaten bilden z.B. J. Brandrup, E.H. Immergut, Polymer Handbook, 1^{st} Ed., J. Wiley, New York 1966, 2^{nd} Ed., J.Wiley, New York 1975, und 3^{rd} Ed., J. Wiley, New York 1989.

Unter C₁- bis C₁₀-Alkylgruppen versteht man im Folgenden lineare oder verzweigte Alkylreste mit 1 bis 10-Kohlenstoffatomen, beispielsweise Methyl, Ethyl, n-Propyl, iso-Propyl, n-Butyl, sec-Butyl, iso-Butyl, tert.-Butyl, n-Pentyl, iso-Pentyl, tert.-Pentyl, n-Hexyl, 2-Ethylhexyl, n-Nonyl oder n-Decyl. Mit C₅- bis C₁₀-Cycloalkylgruppen sind vorzugsweise Cyclopentyl oder Cyclohexylgruppen gemeint, die gegebenenfalls durch 1, 2 oder 3 C₁- bis C₄-Alkylgruppen substituiert sind.

Das wenigstens eine Polymerisat enthält zu 45 bis 74,9 Gew.-%, vorzugsweise 50 bis 65 Gew.-%, jeweils bezogen auf die Gesamtmenge des Polymerisats, wenigstens ein Monomer A in einpolymerisierter Form und wird daher durch Polymerisation einer Monomerenmischung erhalten, die das wenigstens eine Monomer A zu 45 bis 74,9 Gew.-%, vorzugsweise zu 50 bis 65 Gew.-%, jeweils bezogen auf die Gesamtmenge der Monomerenmischung, enthält.

Als Monomere A werden Ester aus Vinylalkohol und einer C₁- bis C₁₀-Monocarbonsäure, C₁- bis C₁₀-Alkylacrylate, C₅- bis C₁₀-Alkylmethacrylate, C₅- bis C₁₀-Cycloalkylacrylate und -methacrylate, C₁- bis C₁₀-Dialkylmaleinate und/oder C₁- bis C₁₀-Dialkylfumarate eingesetzt. Bevorzugt werden solche Monomere A verwendet, deren Homopolymerisate T_{g}-Werte < 0°C aufweisen. Insbesonders bevorzugt werden als Monomere A Vinylacetat, Ethylacrylat, n-Propylacrylat, n-Butylacrylat, iso-Butylacrylat, sec-Butylacrylat, n-Hexylacrylat, 2-Ethylhexylacrylat, n-Hexylmethacrylat, 2-Ethylhexylmethacrylat, Di-n-butylmaleinat, Di-n-butyl-fumarat und/oder deren Mischungen verwendet.

Als Monomere B werden vinylaromatische Monomere, C₁- bis C₄-Alkylmethacrylate und/oder α,β-ungesättigte Carbonsäurenitrile oder Carbonsäuredinitrile verwendet. Sie werden in Mengen von 25 bis 54,9 Gew.-% und vorzugsweise 35 bis 50 Gew.-%, jeweils bezogen auf die Gesamtmenge der Monomerenmischung, zur Polymerisation eingesetzt. Demnach ist das gebildete Polymerisat, auf sein Gesamtmenge bezogen, zu 25 bis 54,9 Gew.-% und vorzugsweise 35 bis 50 Gew.-% aus einpolymerisierten Monomer B-Einheiten aufgebaut. Unter vinylaromatischen Monomeren versteht man insbesondere Derivate des Styrols oder des α-Methylstyrols, in denen die Phenylkerne gegebenenfalls durch 1, 2 oder 3 C₁- bis C₄-Alkylgruppen, Chlor und/oder Methoxygruppen substituiert sind. Bevorzugt werden solche Monomere, deren Homopolymerisate eine Glasübergangstemperatur > 80°C aufweisen. Besonders bevorzugte Monomere sind Styrol, α-Methylstyrol, o- oder p-Vinyltoluol, Methylmethacrylat, Acrylnitril, Methacrylnitril, Maleinsäuredinitril, Fumarsäuredinitril und/oder deren Mischungen.

Das wenigstens eine Monomere C wird in der Monomerenmischung, bezogen auf deren Gesamtmenge, zu 0,001 bis 0,1 Gew.-% eingesetzt. Dementsprechend ist das Polymerisat, bezogen auf seine Gesamtmenge, zu 0,001 bis 0,1 Gew.-% aus einpolymerisierten Monomer C-Einheiten aufgebaut. Bevorzugt werden Monomerenmischungen eingesetzt, die 0,001 bis 0,09 Gew.-% oder 0,001 bis 0,08 Gew.-%, jeweils bezogen auf deren Gesamtmenge, an Monomeren C enthalten. Die Monomerenmischung enthält häufig zu ≥ 0,001 Gew.-%, ≥ 0,002 Gew.-%, ≥ 0,003 Gew.-%, ≥ 0,004 Gew.-%, ≥ 0,005 Gew.-%, ≥ 0,006 Gew.-%, ≥ 0,007 Gew.-%, ≥ 0,008 Gew.-%, ≥ 0,009 Gew.-%, ≥ 0,01 Gew.-%, ≥ 0,02 Gew.-%, ≥ 0,03 Gew.-%, ≥ 0,04 Gew.-%, ≥ 0,05 Gew.-%, ≥ 0,06 Gew.-%, ≥ 0,07 Gew.-%, ≥ 0,08 Gew.-%, ≥ 0,09 Gew.-% und 0,1 Gew.-% oder zu < 0,1 Gew.-%, ≤ 0,09 Gew.-%, ≤ 0,08 Gew.-%, ≤ 0,07 Gew.-%, ≤ 0,06 Gew.-%, ≤ 0,05 Gew.-%, ≤ 0,04 Gew.-%, ≤ 0,03 Gew.-%, ≤ 0,02 Gew.-%, ≤ 0,01 Gew.-%, und alle Werte dazwischen, wenigstens ein Monomer C. Als wenigstens ein Monomer C eignen sich Monomere mit wenigstens zwei nicht konjugierten ethylenisch ungesättigten Doppelbindungen.

Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat.

Optional kann das wenigstens eine Polymerisat durch Polymerisation einer Monomerenmischung erhalten werden, die 0 bis 4 Gew.-% oder 0,1 bis 1 Gew.-% oder 0,2 bis 0,7 Gew.-%, jeweils bezogen auf die Monomerengesamtmenge, wenigstens eines Monomeren D enthält. Demnach kann das Polymerisat zu 0 bis 4 Gew.-% oder 0,1 bis 1 Gew.-% oder 0,2 bis 0,7 Gew.-%, jeweils bezogen auf seine Gesamtmenge, Monomer D-Einheiten einpolymerisiert enthalten. Günstig ist es, wenn das wenigstens eine Polymerisat 0,1 bis 1 Gew.-% an Monomerem D einpolymerisiert enthält. Bei den Monomeren D handelt es sich um ethylenisch ungesättigte Monomere, die anionische Gruppen bilden können. Bei diesen Gruppen handelt es sich vorzugsweise um Carboxylat-, Phosphonat- oder Sulfonatgruppen, insbesondere Carboxylatgruppen. Besonders bevorzugte Monomere D sind monoethylenisch ungesättigte Alkyl- oder Arylsulfonsäuren, wie Vinylsulfonsäure, Methallylsulfonsäure, Vinylbenzolsulfonsäure, Acrylamidoethansulfonsäure, Acrylamido-2-methylpropansulfonsäure, 2-Sulfoethylacrylat, 2-Sulfoethylmethacrylat, 3-Sulfopropylacrylat, 3-Sulfopropylmethacrylat sowie α,β-ethylenisch ungesättigte C₃- bis C₆-Carbonsäuren, α,β-ethylenisch ungesättigte C₄- bis C₈-Dicarbonsäuren oder deren Anhydride, wie Acrylsäure, Methacrylsäure, Crotonsäure, Fumarsäure, Maleinsäure, Maleinsäureanhydrid, Itaconsäure und Itaconsäureanhydrid sowie die Alkalimetall- oder Ammoniumsalze der genannten Monomere, insbesondere deren Natriumsalze.

Die Monomerenmischung kann optional ebenfalls 0 bis 2 Gew.-%, bezogen auf deren Gesamtmenge, wenigstens eines Monomeren E enthalten. Demnach kann das wenigstens eine Polymerisat 0 bis 2 Gew.-%, jeweils bezogen auf die Polymerisatgesamtmenge, Monomer E-Einheiten einpolymerisiert enthalten. Die Monomeren E können in Mengen von 0,1 bis 2 Gew.-%, 0,2 bis 1 Gew.-% aber auch 0,5 bis 2 Gew.-% oder 0,5 bis 1,5 Gew.-%, jeweils bezogen auf die Gesamtmonomerenmenge, einpolymerisiert werden. Geeignete Monomere E sind Amide α,β-ethylenisch ungesättigter C₃- bis C₆-Carbonsäuren, n-Hydroxy-C₂-C₆-alkylester α,β-ethylenisch ungesättigter C₃- bis C₆-Carbonsäuren und/oder N-Vinyllactamen, wie beispielsweise Methacrylsäure- und Acrylsäure-C₁-C₆-hydroxyalkylester, wie 2-Hydroxyethyl-, 3-Hydroxypropyl- oder 4-Hydroxybutylacrylat und -methacrylat, sowie Acrylamid und Methacrylamid oder die in der DE-A 19750618 beschriebenen Vinylphosphonsäuren. Bevorzugt enthält das wenigstens eine Polymerisat jedoch keine Monomer E-Einheiten.

Neben den genannten Monomeren A bis E können in der Monomerenmischung gegebenenfalls weitere Monomere enthalten sein um den jeweiligen Beschichtungsmassen eine höhere Festigkeit zu verleihen. Hier sind beispielsweise Siloxangruppen enthaltende Monomere, wie die Vinyltrialkoxysilane, beispielsweise Vinyltrimethoxysilan, Alkylvinyldialkoxysilane, Acryloxyalkyltrialkoxysilane, oder Methacryloxyalkyltrialkoxysilane, wie beispielsweise Acryloxyethyltrimethoxysilan, Methacryloxyethyltrimethoxysilan, Acryloxypropyltrimethoxysilan oder Methacryloxypropyltrimethoxysilan zu nennen. Die genannten Monomere können in Mengen von 0,05 bis 1 oder 0,05 bis 0,5 Gew.-Teilen, bezogen auf 100 Gew.-Teile Monomere, gebildet aus der Summe der Monomeren A bis E, eingesetzt werden.

Das in den erfindungsgemäßen Beschichtungsmassen verwendete wenigstens eine Polymerisat wird vorteilhaft durch radikalisch initiierte wässrige Emulsionspolymerisation der genannten Monomere A bis E in Gegenwart von 0,1 bis 0,5 Gew.-%, vorzugsweise 0,1 bis 0,4 Gew.-% und insbesondere 0,1 bis 0,3 Gew.-%, jeweils bezogen auf die Gesamtmenge der Monomeren A bis E, wenigstens eines radikalischen Polymerisationsinitiators erhalten. Als radikalische Polymerisationsinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- öder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder DiCumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze, aliphatischer Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Für die Herstellung des wenigstens einen Polymerisats wird vorzugsweise neben den für eine wässrige Emulsionspolymerisation üblichen oberflächenaktiven Substanzen wenigstens ein nichtionischer Emulgator in Mengen von vorzugsweise 0,5 bis 10 Gew.-%, insbesondere 1 bis 8 Gew.-% und besonders bevorzugt 1 bis 4 Gew.-%, jeweils bezogen auf die Gesamtmonomermenge, verwendet.

Einsetzbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄ bis C₉), Ethoxylate langkettiger Alkohole (EO-Grad: 3 bis 50, Alkylrest: C₈ bis C₃₆) sowie Polyethylenoxid/Polypropylenoxid-Blockcopolymere. Bevorzugt werden Ethoxylate langkettiger Alkanole (Alkylrest: C₁₀ bis C₂₂, mittlerer Ethoxylierungsgrad: 10 bis 50) und darunter besonders bevorzugt solche mit einem linearen C₁₂- bis C₁₈-Alkylrest und einem mittleren Ethoxylierungsgrad von 10 bis 50 als alleinige, nichtionische Emulgatoren verwendet. Ebenfalls bevorzugt sind Ethoxylate von C₁₂- bis C₁₈-Alkanolen, insbesondere von Oxoalkoholen, die einen Ethoxilierungsgrad im Bereich von 8 bis 50 aufweisen.

Weitere gebräuchliche Emulgatoren sind vorzugsweise anionischer Natur. Hierzu zählen Alkalimetall- und Ammoniumsalze von Alkylsulfaten (Alkylrest: C₈ bis C₁₂), von Schwefelsäurehalbestern ethoxylierter Alkanole (EO-Grad: 2 bis 50, Alkylrest: C₁₂ bis C₁₈) und ethoxylierter Alkylphenole (EO-Grad: 3 bis 50, Alkylrest: C₄ bis C₉), von Alkylsulfonsäuren (Alkylrest: C₁₂ bis C₁₈) und von Alkylarylsulfonsäuren (Alkylrest: C₉ bis C₁₈). Weitere geeignete Emulgatoren finden sich in der WO 99/46337 und in Houben-Weyl, Methoden der organischen Chemie, Band XIV/1, Makromolekulare Stoffe, Georg-Thieme Verlag, Stuttgart, 1961, Seiten 192 bis 208. Bevorzugte anionische grenzflächenaktive Substanzen sind Alkylsulfate.

Als weitere anionische Emulgatoren haben sich ferner Verbindungen der allgemeinen Formel I 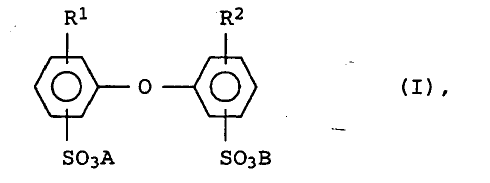 worin R¹ und R² H-Atome oder C₄- bis C₂₄-Alkyl bedeuten und nicht gleichzeitig H-Atome sind, und A und B Alkalimetallionen und/oder Ammoniumionen sein können, erwiesen. In der allgemeinen Formel I bedeuten R¹ und R² bevorzugt lineare oder verzweigte Alkylreste mit 6 bis 18 C-Atomen, insbesondere mit 6, 12 und 16 C-Atomen oder -H, wobei R¹ und R² nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen I sind allgemein bekannt, z.B. aus US-A 4269749, und im Handel erhältlich.

Darüber hinaus können geeignete Schutzkolloide, wie beispielsweise Polyvinylalkohole, Cellulosederivate oder Vinylpyrrolidon enthaltende Copolymerisate eingesetzt werden. Eine ausführliche Beschreibung weiterer geeigneter Schutzkolloide findet sich in Houben-Weyl, Methoden der Organischen Chemie, Bd. 14/1, Makromolekulare Stoffe, Georg-Thieme-Verlag, Stuttgart, 1961, Seiten 411 bis 420. Die Gesamtmenge an grenzflächenaktiven Substanzen macht üblicherweise bis zu 30 Gew.-%, vorzugsweise 0,5 bis 10 Gew.-% und besonders bevorzugt 1 bis 6 Gew.-%, bezogen auf die Gesamtmenge der zu polymersierenden Monomere, aus.

Das Molekulargewicht der Polymerisate kann prinzipiell durch Zugabe geringer Mengen, oft bis zu 2 Gew.-%, bezogen auf die Gesamtmenge der zu polymerisierenden Monomere, einer oder mehrerer, das Molekulargewicht regelnder Substanzen, z.B. organische Thioverbindungen, bevorzugt Thioalkylsilane, oder Allylalkohole, eingestellt werden. Bevorzugt sind jedoch Polymerisate, die in Abwesenheit solcher Verbindungen hergestellt wurden.

Die radikalisch initiierte wässrige Emulsionspolymerisation kann sowohl kontinuierlich als auch nach der sogenannten Batch-Fahrweise, vorzugsweise jedoch nach einem halbkontinuierlichen Verfahren erfolgen. Dabei wird eine Teilmenge der zu polymerisierenden Monomeren und/oder der anderen Hilfsstoffe im Reaktionsgefäß vorgelegt und die Restmenge kontinuierlich, einschließlich Stufen- oder Gradientenfahrweise dem Polymerisationsansatz zugeführt. Bevorzugt ist ein halbkontinuierliches Zulaufverfahren, bei dem ≤ 10 Gew.-%, ≤ 5 Gew.-% oder ≤ 2 Gew.-% der Monomeren gemeinsam mit einer Teilmenge des radikalischen Polymerisationsinitiators und des Emulgators bei Reaktionstemperatur im Reaktionsgefäß vorgelegt werden und die verbleibende Restmenge der Monomeren, des radikalischen Polymerisationsinitiators und des Emulgators innerhalb von 5 Stunden, bevorzugt zwischen 2 und 5 Stunden und insbesondere bevorzugt zwischen 2 und 4 Stunden, kontinuierlich dem Reaktionsgefäß zugeführt werden.

Häufig werden die Monomeren dem Reaktionsgefäß in Form einer wässrigen Emulsion, enthaltend eine Teilmenge des Wassers, eine Teil- oder die Gesamtmenge des wenigstens einen Emulgators sowie eine Teil- oder die Gesamtmenge der zu polymerisierenden Monomeren, zugeführt.

Neben der saatfreien Herstellungsweise kann zur Einstellung der Polymerisatteilchengröße die Emulsionspolymerisation nach dem Saatlatex-Verfahren oder in Gegenwart eines in situ hergestellten Saatlatex erfolgen. Verfahren hierzu sind bekannt und können dem Stand der Technik entnommen werden (siehe beispielsweise EP-B 40419, EP-A 567812, EP-A 614922 sowie 'Encyclopedia of Polymer Science and Technology', Vol. 5, John Wiley & Sons Inc., New York, 1966, Seite 847). So empfiehlt der Stand der Technik, beim Zulaufverfahren eine definierte feinteilige Saat-Polymerisatdispersion im Polymerisationsgefäß vorzulegen und dann die Monomere in Gegenwart der Saat zu polymersieren. Hierbei wirken die Saat-Polymerisatteilchen als 'Polymerisationskeime' und entkoppeln die Polymerisatteilchenbildung und das Polymerisatteilchenwachstum. Während der Emulsionspolymerisation kann weitere Saatdispersion zugegeben werden. Hierdurch werden breite Größenverteilungen der Polymerisatteilchen erreicht, die insbesondere bei Polymerisatdispersionen mit hohem Feststoffgehalt oftmals erwünscht sind (vgl. hierzu beispielsweise DE-A 4213965). Anstelle der Zugabe eines definierten Saatlatex kann dieser auch in situ erzeugt werden. Hierzu wird beispielsweise ein Teil der Monomere und des Initiators zusammen mit Emulgator vorgelegt und auf Reaktionstemperatur erwärmt, wobei eine relativ feinteilige Saat entsteht. Anschliessend wird im gleichen Polymerisationsgefäß die eigentliche Polymerisation nach dem Zulaufverfahren durchgeführt (siehe auch DE-A 4213965). Die Art und Weise, wie der Initiator der Emulsionspolymerisation zudosiert ist, ist nicht kritisch. Der Initiator kann sowohl vollständig im Polymerisationsgefäß vorgelegt oder aber, nach Maßgabe seines Verbrauchs, im Verlauf der Emulsionspolymerisation kontinuierlich oder stufenweise zugesetzt werden. Die Vorgehensweise hängt sowohl von der chemischen Natur des Initiators als auch von der Polymerisationstemperatur ab und kann vom Fachmann je nach Bedarf gewählt werden. Bevorzugt wird eine kontinuierliche oder stufenweise Zudosierung zum Reaktionsansatz.

Polymerisationsdruck und Polymerisationstemperatur sind gleichfalls von untergeordneter Bedeutung. Im Allgemeinen arbeitet man bei Temperaturen zwischen Raumtemperatur und 200°C, vorzugsweise bei Temperaturen von 50 bis 120°C und besonders bevorzugt zwischen 70 und 95°C. Vorteilhaft wird die radikalisch initiierte wässrige Emulsionspolymerisation bei Atmosphärendruck (1 bar absolut) unter Inertgasatmosphäre, wie beispielsweise unter Stickstoff oder Argon durchgeführt.

Im Anschluß an die eigentliche Polymerisationsreaktion ist es in der Regel erforderlich, Geruchsträger, wie Restmonomeren und andere organische flüchtige Bestandteilen aus der erfindungsgemäßen wässrigen Polymerisatdispersion zu entfernen. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z.B. in der DE-A 4435423, DE-A 4419518 sowie in der DE-A 4435422 aufgeführt sind, vor, während oder nach der destillativen Behandlung erfolgen. Als Oxidationsmittel zur redoxinitiierten Nachpolymerisation eignen sich insbesondere Wasserstoffperoxid, tert.-Butylhydroperoxid, Cumolhydroperoxid oder Alkaliperoxodisulfate. Geeignete Reduktionsmittel sind Natriumdisulfit, Natriumhydrogensulfit, Natriumdithionit, Natriumhydroxymethansulfinat, Formamidinsulfinsäure, Acetonbisulfit (= Natriumhydrogensulfit-Additionsproduckt an Aceton), Ascorbinsäure bzw. reduzierend wirkende Zuckerverbindungen. Die Nachpolymerisation mit dem Redoxinitiatorsystem wird im Temperaturbereich von 10 bis 100°C vorzugsweise bei 20 bis 90°C durchgeführt. Die Redoxpartner können der wässrigen Dispersion unabhängig voneinander vollständig, portionsweise bzw. kontinuierlich über einen Zeitraum von wenigen Sekunden bis zu 4 Stunden zugegeben werden. Zur Verbesserung der Nachpolymerisationswirkung der Redoxinitiatorsysteme können der Dispersion auch lösliche Salze von Metallen wechselnder Wertigkeit, wie Eisen, Kupfer oder Vanadiumsalze, zugesetzt werden. Häufig werden auch Komplexbildner zugegeben, die die Metallsalze unter den Reaktionsbedingungen in Lösung halten.

Es ist bevorzugt, die Polymerisatdispersion abschliessend mit einer geruchsarmen Base, vorzugsweise mit Alkali- oder Erdalkalimetallhydroxyden, Erdalkalimetalloxyden oder nichtflüchtigen Aminen zu neutralisieren. Zu den nichtflüchtigen Aminen zählen insbesondere ethoxylierte Diamine oder Polyamine, wie sie z.B. unter dem Namen Jeffamine (der Firma Texaco Chemical Co.) kommerziell erhältlich sind. Bevorzugt wird jedoch mit wässriger Natron- oder Kalilauge neutralisiert.

Die erfindungsgemäßen Bindemittelpolymerisate weisen in der Regel Mindestfilmbildetemperaturen MFT ≤ 10°C, bevorzugt ≤ 5°C und besonders bevorzugt ≤ 0°C auf. Dem Fachmann ist aufgrund der T_{g} der Polymerisate und der Polymerisationsparameter bekannt, welche Monomeren oder Monomerenmischungen dafür eingesetzt werden müssen. Da die MFT unterhalb 0 °C nicht mehr meßbar ist, kann die untere Grenze der MFT nur durch die T_{g}-Werte angegeben werden. Die T_{g}-Werte sollten dabei ~20 °C, vorzugsweise ~10 °C, nicht unterschreiten. Die Bestimmung der MFT erfolgt nach DIN 53 787.

Der über quasielastische Lichtstreuung (ISO-Norm 13 321) ermittelte zahlenmittlere Teilchendurchmesser der in den wässrigen Polymerisatdispersionen enthaltenen Polymerisatteilchen liegt vorzugsweise im Bereich von 50 bis 400 nm, besonders bevorzugt im Bereich von 90 bis 200 nm. Die Polymerisatteilchen weisen in der Regel eine monomodale Teilchengrößenverteilung auf.

Die erfindungsgemäßen wässrigen Polymerisatdispersionen sind aufgrund ihrer Herstellungsweise nahezu vollständig frei von Lösungsmitteln, Monomeren oder anderen flüchtigen Bestandteilen und somit geruchs- und emissionsarm. Die erfindungsgemäßen Polymerisatdispersionen eigenen sich zur Herstellung emissionsarmer und lösungsmittelfreier Beschichtungsmassen. Unter Beschichtungsmassen versteht man beispielsweise Kunststoffdispersionsputze, Fliesenkleber, Anstrichmittel und insbesondere emissionsarme Dispersionsfarben. Bevorzugt eignen sich die erfindungsgemäßen Polymerisatdispersionen für emissionsarme Beschichtungsmassen, mit hohem Pigmentanteil (PVK, s.o.), nämlich mit einer PVK ≥ 70 %, insbesondere Dispersionsfarben, wie sie für Innenanstriche verwendet werden.

Solche Beschichtungsmassen sind dem Fachmann im Prinzip bekannt. Eine ausführliche Beschreibung wässriger Kunststoffdispersionsfarben findet sich beispielsweise in Ullmanns Enzyklopädie der Technischen Chemie, VCH Weinheim, 1978, 4. Aufl., Bd. 15, Seiten 664 bis 668. Die erfindungsgemäßen emissionsarmen Dispersionsfarben, Fließenkleber oder Putze enthalten in der Regel, bezogen auf ihren Gesamtfeststoffgehalt,

| | |
|---|---|
| 40 bis 94 Gew.-% | Füllstoffe, |
| 2 bis 40 Gew.-% | Pigmente, |
| 4 bis 30 Gew.-% | wenigstens eines Polymerisats (berechnet als Feststoff), und |
| bis 10 Gew.-% | weiterer üblicher Hilfsstoffe. |

Insbesondere enthalten die erfindungsgemäßen Beschichtungsmassen, bezogen auf ihren Gesamtfeststoffgehalt, bis zu 20 Gew.-% wenigstens ein erfindungsgemäßes Polymerisat.

Geeignete Füllstoffe sind beispielsweise Silikate, Erdalkalicarbonate, vorzugsweise Calciumcarbonat in Form von Calcit oder Kreide, Dolomit sowie Aluminiumsilikate oder Magnesiumsilikate, wie Talkum. Ein typisches Pigment ist beispielsweise Titandioxid, vorzugsweise in der Rutilform. Abtönfarben können jedoch auch farbige Pigmente, beispielsweise Eisenoxide enthalten. Zu den üblichen Hilfsmitteln zählen Netzmittel, wie Natrium- oder Kaliumpolyphosphate, Polyacrylsäuren, deren Alkalisalze, Polyvinylalkohole etc. Darüber hinaus enthalten diese Beschichtungsmassen in der Regel Stoffe, die die Viskosität modifizieren, beispielsweise Celluloseether, wie Hydroxyethylcellulose. Weiterhin können den Beschichtungsmassen Dispergiermittel, Entschäumer, Konservierungs oder Hydrophobiermittel sowie Farbstoffe, Fasern oder weitere Bestandteile zugesetzt werden.

Die erfindungsgemäßen lösungsmittelfreien, emissionsarmen Beschichtungsmassen zeichnen sich gegenüber bereits bekannten Beschichtungsmassen durch eine hohe Abriebfestigkeit auch bei hohen Pigmentvolumenkonzentrationen, beispielsweise bei einer PVK von 75 % (nach DIN 53 778) aus.

Das Pigmentbindevermögen der erfindungsgemäßen Polymerisatdispersionen, das bereits ohne Verwendung spezieller Wirkmonomerer oder anderer Zusätze das Qualtitätsniveau von wässrigen Polymerisatdispersionen des Standes der Technik, die diese speziellen Wirkmonomere oder Zusätze enthalten, erreicht oder gar überschreitet, kann bei Bedarf durch Mitverwendung der vom Stand der Technik empfohlenen Wirkmonomere und/oder Zusätze gesteigert werden. Hier sei beispielsweise die Modifizierung der Bindemittelpolymerisate mit Silangruppen genannt. Diese Modifizierung kann beispielsweise durch Einpolymerisieren von Silanen, die olefinische Doppelbindungen enthalten, beispielsweise Vinylsilane oder Methacryloxyalkylsilane (s.o., wie auch EP-A 327006, EP-A 327376 oder EP-A 612771) erfolgen. Weiterhin können Silangruppen nach EP-A 640629 durch Polymerisation in Gegenwart von Epoxysilanen, beispielsweise Glycidyloxypropyltrimethoxysilan oder nach EP-A 327376 durch Polymerisation in Gegenwart von Mercaptoalkyltrisalkoxysilan in das Bindemittelpolymerisat eingeführt werden.

Die im Folgenden angegebenen Beispiele sollen die Erfindung erläutern, ohne sie jedoch einzuschränken.

### Beispiele

### Analytik

Der zahlenmittlere Teilchendurchmesser der Polymerisatteilchen wurde durch dynamische Lichtstreuung an einer 0,005 bis 0,01 gew.-%igen wässrigen Dispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13 321).

Die Bestimmung der Mindestfilmbildetemperatur MFT erfolgte in Anlehnung an die DIN 53 787. Als Meßgerät diente eine Filmbildebank (= Metallplatte, an die ein Temperaturgradient angelegt wird). Die Verfilmung erfolgte bei einer Naßschichtdicke von 1 mm. Als Mindestfilmbildetemperatur wird die Temperatur angegeben, bei der der Film beginnt, rissig zu werden.

Die Feststoffgehalte wurden bestimmt, indem eine aliquote Menge 6 Stunden bei 140 °C in einem Trockenschrank getrocknet wurde. Es wurden jeweils zwei separate Messungen durchgeführt. Der in den jeweiligen Beispielen angegebene Wert stellt den Mittelwert der beiden Meßergebnisse dar.

### 1. Allgemeine Vorschrift zur Herstellung der erfindungsgemäßen Polymerisatdispersionen

### Beispiele 1 bis 4 sowie Vergleichsbeispiele

In einem 2 l-Polymerisationsgefäß mit Rührer und Rückflußkühler wurden

| | |
|---|---|
| 190 g | entionisiertes Wasser und |
| 14,2 g | einer wässrigen Polystyrollatex (Polymerisatfeststoffgehalt 33 Gew.-%, zahlenmittlerer Teilchendurchmesser 30 nm) |

vorgelegt und unter Rühren und Stickstoffatmosphäre auf 85 °C erhitzt. Dann wurden 8,4 g von Zulauf II zugegeben und die Temperatur beibehalten. Nach 5 Minuten wurden unter Rühren und Beibehaltung der Reaktionstemperatur, gleichzeitig beginnend, der Rest von Zulauf II innerhalb von 3,5 Stunden und die Gesamtmenge von Zulauf I innerhalb 3 Stunden dem Polymerisationsansatz kontinuierlich zudosiert. Nach Ende von Zulauf II ließ man noch 1 Stunde bei Reaktionstemperatur nachreagieren. Dann kühlte man den Reaktionsansatz auf 70 °C ab und dosierte, gleichzeitig beginnend, während 1 Stunde über zwei separate Zuläufe kontinuierlich 10,5 g einer 10 gew.-%igen wässrigen Lösung von tert.-Butylhydroperoxid sowie 13,3 g einer 12 gew.-%igen wässrigen Lösung von Acetonbisulfit (s.o.) zu. Anschließend kühlte man den Reaktionsansatz auf Raumtemperatur ab, stellte mit 10 gew.-%iger wässriger Lösung von Natriumhydroxid einen pH-Wert von 7,5 ein und filtrierte durch einen Metallfilter mit 250 µm Maschenweite. Eine Zusammenstellung der Verfahrensparameter sowie die Charakterisierung der erhaltenen Polymerisate hinsichtlich Feststoffgehalt FG, zahlenmittlerer Teilchendurchmesser Dₙ, Glasübergangstemperatur T_{g} und Mindestfilmbildetemperatur MFT findet sich in Tabelle 1.

### Zulauf I:

| | |
|---|---|
| x g | entionisiertes Wasser |
| 33,3 g | einer 15 gew.-%igen wässrigen Lösung von Natriumlaurylsulfat |
| 420 g | n-Butylacrylat (Monomer A) |
| 280 g | Styrol (Monomer B) |
| y g | 1,4-Butandioldiacrylat (BDA; Monomer C) |
| z g | Acrylsäure (AS; Monomer D) |

### Zulauf II:

| | |
|---|---|
| 2,1 g | Natriumperoxodisulfat |
| 81,9 g | entionisiertes Wasser |

**Tabelle 1 Zusammenfassende Darstellung der Beispiele 1 bis 4 sowie der Vergleichsbeispiele**

| Beispiel | Wasser x [g] | BDA y [g] | AS z [g] | FG [%] | Dₙ [nm] | MFT [°C] | T_{g} [°C] |
|---|---|---|---|---|---|---|---|
| Vergleich 1 | 288 | 0 | 0 | 51 | 163 | 1 | 6,9 |
| 1 | 531 | 0,07 | 0 | 44 | 170 | 4 | 7,4 |
| 2 | 300 | 0,35 | 0 | 49 | 166 | 1 | 7,2 |
| 3 | 300 | 0,70 | 0 | 48 | 170 | 4 | 6,8 |
| Vergleich 2 | 301 | 1,40 | 0 | 49 | 168 | 4 | 7,5 |
| Vergleich 3 | 307 | 7,00 | 0 | 49 | 169 | 5 | 7,4 |
| 4 | 536 | 0.07 | 3.5 | 44 | 174 | 4 | 7,4 |

### 2. Allgemeine Vorschrift zur Herstellung der erfindungsgemäßen Dispersionsfarben

Die Herstellung der erfindungsgemäßen Dispersionsfarben erfolgte durch Abmischen der in Tabelle 2 angegebenen Komponenten in der dort angegebenen Reihenfolge mittels eines Dissolvers. Der wechselnde Feststoffgehalt der eingesetzten Polymerisatdispersionen wurde bei der Einsatzmenge berücksichtigt und so bemessen, daß 110 Gew.-Teile Polymerisat in der Formulierung enthalten waren. Die Formulierungen wurden so eingestellt, daß sie eine Pigmentvolumenkonzentration von 79 % aufwiesen (die Pigmentvolumenkonzentrationen wurden nach der oben angegebenen Formel berechnet; die einzelnen Volumina waren aus den gegebenen Mengen über die jeweilige Dichten zugänglich).

**Tabelle 2 Formulierung der erfindungsgemäßen Dispersionsfarben (PVK: 79 %)**

| Gew.-Teile | Komponente |
|---|---|
| 300 | entionisiertes Wasser |
| 1 | 20 gew.-%ige wässrige Lösung von Kaliumhydroxid |
| 6 | Verdicker, Celluloseether, Natrosol® 250 HR der Fa. Hercules GmbH, Düsseldorf |
| 3 | Pigmentverteiler S, 45 gew.-%ige wässrige Lösung eines Natriumpolyacrylats der BASF AG, Ludwigshafen |
| 3 | Netzmittel, 50 gew.-%ige wässrige Lösung von Tetrakaliumpyrophosphat |
| 2 | Konservierungsmittel, Parmetol® A26 der Fa. Schulte & Mayr GmbH, Norderstedt |
| 2 | Entschäumer, Agitan® 280 der Fa. Münzing Chemie GmbH, Heilbronn |
| 90 | Pigment, Titandioxid, Kronos® 2300 der Fa. Kronos Titan GmbH, Leverkusen |
| 215 | Füllstoff, Calciumcarbonat, mittlerer Teilchendurchmesser 2,5 µm, Omyacarb® 2 GU der Fa. Omya GmbH, Köln |
| 185 | Füllstoff, Calciumcarbonat, mittlerer Teilchendurchmesser 5 µm, Omyacarb® 5 GU der Fa. Omya GmbH, Köln |
| 65 | Extender, Mischung aus Magnesiumsilikat (Talkum) und Calcium/Magnesiumcarbonat (Dolomit), mittlerer Teilchendurchmesser 6 µm, Naintsch® SE-Micro der Fa. Luzenac Deutschland GmbH, Düsseldorf |
| 2 | Entschäumer, Agitan® 280 der Fa. Münzing Chemie GmbH, Heilbronn |
| 110 | Polymerisat (als Feststoff gerechnet) |
| w | unterschiedliche Wassermengen, resultierend aus den unterschiedlichen Wassergehalten der einzelnen wässrigen Polymerisatdispersionen (Beispiele 1 bis 4 sowie Vergleichsbeispiele) |

### 3. Allgemeine Vorschrift zur Prüfung der Scheuerfestigkeit der mittels der erfindungsgemäßen Dispersionsfarben erhaltenen Anstrichfilme

Die Prüfung erfolgte in Anlehnung an die DIN 53 778, Blatt 2. Mit Hilfe eines 60 mm breiten Rakels wurde auf eine Leneta-Folie von ca. 430 x 80 mm ein Anstrichfilm aufgezogen, dessen Trockenschichtdicke 100 µm betrug. Dieser Film wurde bei Raumtemperatur 7 Tage gelagert. Dann wurde in einem Scheuergerät unter ständigem Zutropfen einer 0,25 gew.-%igen wässrigen Lösung von Dodecylbenzolsulfonat-Natriumsalz (z.B. Marlon® A 350 der Fa. Hüls) eine Scheuerbürste über den Anstrich geführt. Die Anzahl der Doppelhübe (Scheuerzyklen) bis zum Durchscheuern des Anstrichs diente als Maß für die Scheuerfestigkeit. Die Ergebnisse sind in Tabelle 3 zusammengefaßt.

**Tabelle 3 Zusammenfassende Darstellung der hergestellten Anstrichfilme und deren Prüfung in Anlehnung an die DIN 53 778**

| Beispiel | BDA y [g] | AS z [g] | Scheuerzyklen |
|---|---|---|---|
| Vergleich 1 | 0 | 0 | 2250 |
| 1 | 0,07 | 0 | 4050 |
| 2 | 0,35 | 0 | 3410 |
| 3 | 0,70 | 0 | 2250 |
| Vergleich 2 | 1,40 | 0 | 1370 |
| Vergleich 3 | 7,00 | 0 | 50 |
| 4 | 0,07 | 3,5 | 4280 |

Wie aus Tabelle 3 ersichtlich ist, besitzen die bei Verwendung der erfindungsgemäßen Bindemittel erhaltenen Anstrichfilme eine höhere Abriebfestigkeit als Anstrichfilme auf Basis von Bindemittel ohne oder mit einem zu hohen Gehalt an vernetzenden Monomeren.

## Patentansprüche

1. Beschichtungsmasse mit einer Pigmentvolumenkonzentration ≥ 70 %, enthaltend als Bindemittel wenigstens ein Polymerisat, **dadurch gekennzeichnet, daß** das wenigstens eine Polymerisat durch radikalisch initiierte wässrige Emulsionspolymerisation einer Mischung von ethylenisch ungesättigten Monomeren erhalten wird, die aus
| | |
|---|---|
| 45 bis 74,9 Gew.-% | wenigstens eines Monomeren, ausgewählt unter einem Ester aus Vinylalkohol und einer C₁- bis C₁₀-Monocarbonsäure, C₁-bis C₁₀-Alkylacrylat, C₅- bis C₁₀-Alkylmethacrylat, C₅- bis C₁₀-Cycloalkylacrylat und -methacrylat, C₁- bis C₁₀-Dialkylmaleinat und/oder C₁- bis C₁₀-Dialkylfumarat, dessen Homopolymerisat eine Glasübergangstemperatur < 30°C aufweist (Monomere A), |
| 25 bis 54,9 Gew.-% | wenigstens eines Monomeren, ausgewählt unter einem vinylaromatischen Monomer, einem C₁- bis C₄-Alkylmethacrylat und/ oder einem α,β-ungesättigten Carbonsäurenitril oder -dinitril, dessen Homopolymerisat eine Glasübergangstemperatur > 50°C aufweist (Monomere B), |
| 0,001 bis 0,1 Gew.-% | wenigstens eines vernetzend wirkenden Monomeren mit wenigstens zwei nichtkonjugierten Vinylgruppen (Monomere C), und optional |
| 0 bis 4 Gew.-% | wenigstens eines säuregruppenhaltigen Monomeren (Monomere D) sowie |
| 0 bis 2 Gew.-% | wenigstens eines weiteren Monomeren (Monomere E), |
jeweils bezogen auf die Gesamtmenge der zur Polymerisation eingesetzten ethylenisch ungesättigten Monomeren, besteht.

2. Beschichtungsmasse nach Anspruch 1, **dadurch gekennzeichnet, daß** die Monomerenmischung 0,001 bis 0,09 Gew.-% wenigstens eines Monomeren C enthält.

3. Beschichtungsmasse nach Anspruch 1 oder 2, **dadurch gekennzeichnet, daß** die Monomerenmischung 0,001 bis 0,08 Gew.-% wenigstens eines Monomeren C enthält.

4. Beschichtungsmasse nach einem der Ansprüche 1 bis 3, **dadurch gekennzeichnet, daß** die Monomerenmischung 0,1 bis 1 Gew.-% wenigstens eines Monomeren D enthält.

5. Beschichtungsmasse nach einem der Ansprüche 1 bis 4, **dadurch gekennzeichnet, daß** das Polymerisat aus Teilchen besteht, deren zahlenmittlerer Durchmesser 50 bis 400 nm beträgt.

6. Beschichtungsmasse nach einem der Ansprüche 1 bis 5, **dadurch gekennzeichnet, daß** das wenigstens eine Polymerisat eine Mindestfilmbildetemperatur ≤ 10 °C aufweist.

7. Beschichtungsmasse nach einem der Ansprüche 1 bis 6, **dadurch gekennzeichnet, daß** sie
| | |
|---|---|
| 40 bis 94 Gew.-% | Füllstoffe, |
| 2 bis 40 Gew.-% | Pigmente, |
| 4 bis 30 Gew.-% | wenigstens eines Polymerisats (berechnet als Feststoff) sowie |
| bis zu 10 Gew.-% | weiterer üblicher Hilfsstoffe, |
jeweils bezogen auf den Gesamtfeststoffgehalt der Beschichtungsmasse, enthält.

8. Verwendung einer Beschichtungsmasse gemäß einem der Ansprüche 1 bis 7 als Dispersionsfarbe.

9. Verwendung einer Beschichtungsmasse gemäß einem der Ansprüche 1 bis 7 als Kunststoffdispersionsputz.

10. Verwendung einer Beschichtungsmasse gemäß einem der Ansprüche 1 bis 7 als Fliesenkleber. jeweils bezogen auf den Gesamtfeststoffgehalt der Beschichtungsmasse, enthält.

11. Verwendung einer Beschichtungsmasse gemäß einem der Ansprüche 1 bis 10 als Dispersionsfarbe.

12. Verwendung einer Beschichtungsmasse gemäß einem der Ansprüche 1 bis 10 als Kunststoffdispersionsputz.

13. Verwendung einer Beschichtungsmasse gemäß einem der Ansprüche 1 bis 10 als Fliesenkleber.

14. Polymerisat, das folgende Monomereinheiten, jeweils bezogen auf die Gesamtmenge des Polymerisats, einpolymerisiert enthält:
| | |
|---|---|
| 45 bis 74,9 Gew.-% | wenigstens eines Monomeren, dessen Homopolymerisat eine Glasübergangstemperatur < 30°C aufweist (Monomere A), |
| 25 bis 54,9 Gew.-% | wenigstens eines Monomeren, dessen Homopolymerisat eine Glasübergangstemperatur > 50°C aufweist (Monomere B), |
| 0,001 bis 0,1 Gew.-% | wenigstens eines vernetzend wirkenden Monomeren mit wenigstens zwei nichtkonjugierten Vinylgruppen (Monomere C), und optional |
| 0 bis 4 Gew.-% | wenigstens eines säuregruppenhaltigen Monomeren (Monomere D) sowie |
| 0 bis 2 Gew.-% | wenigstens eines weiteren Monomeren (Monomere E). |

15. Polymerisat nach Anspruch 14, **dadurch gekennzeichnet, daß** das Monomer A ausgewählt ist unter wenigstens einem Ester aus Vinylalkohol und einer C₁- bis C₁₀-Monocarbonsäure, C₁- bis C₁₀-Alkylacrylat, C₅- bis C₁₀-Alkylmethacrylat, C₅- bis C₁₀-Cycloalkylacrylat und -methacrylat, C₁- bis C₁₀-Dialkylmaleinat und/oder C₁- bis C₁₀-Dialkylfumarat und das Monomer B ausgewählt ist unter wenigstens einem vinylaromatischen Monomer, einem C₁- bis C₄-Alkylmethacrylat und/oder einem α,β-ungesättigten Carbonsäurenitril oder -dinitril.

16. Polymerisat nach einem der Ansprüche 14 oder 15, **dadurch gekennzeichnet, daß** das Polymerisat 0,001 bis 0,09 Gew.-%, bezogen auf die Gesamtpolymerisatmenge, wenigstens eines Monomeren C einpolymerisiert enthält.

17. Polymerisat nach einem der Ansprüche 14 bis 16, **dadurch gekennzeichnet, daß** das Polymerisat 0,001 bis 0,08 Gew.-%, bezogen auf die Gesamtpolymerisatmenge, wenigstens eines Monomeren C einpolymerisiert enthält.

18. Polymerisat nach einem der Ansprüche 14 bis 17, **dadurch gekennzeichnet, daß** das Polymerisat 0,1 bis 1 Gew.-%, bezogen auf die Gesamtpolymerisatmenge, wenigstens eines Monomeren D einpolymerisiert enthält.

19. Polymerisat nach einem der Ansprüche 14 bis 18, **dadurch gekennzeichnet, daß** das Polymerisat aus Teilchen besteht, deren zahlenmittlerer Durchmesser 50 bis 400 nm beträgt.

20. Polymerisat nach einem der Ansprüche 14 bis 19, **dadurch gekennzeichnet, daß** das Polymerisat eine Mindestfilmbildetemperatur ≤ 10 °C aufweist.

21. Wässrige Polymerisatdispersion, **dadurch gekennzeichnet, daß** sie wenigstens ein Polymerisat gemäß einem der Ansprüche 14 bis 20 enthält.

## Claims

1. A coating composition having a pigment binder concentration ≥ 70% comprising as binder at least one addition polymer, wherein said at least one addition polymer is obtained by free-radically initiated aqueous emulsion polymerization of a mixture of ethylenically unsaturated monomers comprising
| | |
|---|---|
| 45 to 74.9% | by weight of at least one monomer, selected from an ester of vinyl alcohol and a C₁ to C₁₀ monocarboxylic acid, C₁ to C₁₀ alkyl acrylate, C₅ to C₁₀ alkyl methacrylate, C₅ to C₁₀ cycloalkyl acrylate and cycloalkyl methacrylate, C₁ to C₁₀ dialkyl maleate and/or C₁ to C₁₀ dialkyl fumarate, whose homopolymer has a glass transition temperature < 30°C (monomers A), |
| 25 to 54.9% | by weight of at least one monomer, selected from a vinylaromatic monomer, a C₁ to C₄ alkyl methacrylate and/or an α,β-unsaturated carbonitrile or dicarbonitrile, whose homopolymer has a glass transition temperature > 50°C (monomers B), |
| 0.001 to 0.1% | by weight of at least one crosslinking monomer having at least two nonconjugated vinyl groups (monomers C), and optionally |
| 0 to 4% | by weight of at least one monomer containing acid groups (monomers D), and |
| 0 to 2% | by weight of at least one further monomer (monomers E), |
based in each case on the total amount of the ethylenically unsaturated monomers used for the polymerization.

2. The composition according to claim 1, wherein the monomer mixture comprises from 0.001 to 0.09% by weight of at least one monomer C.

3. The composition according to claim 1 or 2, wherein the monomer mixture comprises from 0.001 to 0.08% by weight of at least one monomer C.

4. The composition according to any of claims 1 to 3, wherein the monomer mixture comprises from 0.1 to 1% by weight of at least one monomer D.

5. The composition according to any of claims 1 to 4, wherein the polymer consists of particles whose number-average diameter is from 50 to 400 nm.

6. The composition according to any of claims 1 to 5, wherein said at least one polymer has a minimum film-forming temperature ≤ 10°C.

7. The composition according to any of claims 1 to 6, comprising
| | |
|---|---|
| 40 to 94% | by weight of fillers, |
| 2 to 40% | by weight of pigments, |
| 4 to 30% | by weight of at least one addition polymer (calculated as solids), and |
| up to 10% | by weight of further customary auxiliaries, |
based in each case on the total solids content of the coating composition.

8. The use of a composition according to any of claims 1 to 7 as an emulsion paint.

9. The use of a composition according to any of claims 1 to 7 as a polymer dispersion render.

10. The use of a composition according to any of claims 1 to 7 as a tile adhesive.
based in each case on the total solids content of the coating composition.

11. The use of a composition according to any of claims 1 to 10 as an emulsion paint.

12. The use of a composition according to any of claims 1 to 10 as a polymer dispersion render.

13. The use of a composition according to any of claims 1 to 10 as a tile adhesive.

14. An addition polymer comprising in copolymerized form the following monomer units, based in each case on the total amount of the polymer:
| | |
|---|---|
| 45 to 74.9% | by weight of at least one monomer whose homopolymer has a glass transition temperature < 30°C (monomers A), |
| 25 to 54.9% | by weight of at least one monomer whose homopolymer has a glass transition temperature > 50°C (monomers B), |
| 0.001 to 0.1% | by weight of at least one crosslinking monomer having at least two nonconjugated vinyl groups (monomers C), and optionally |
| 0 to 4% | by weight of at least one monomer containing acid groups (monomers D), and |
| 0 to 2% | by weight of at least one further monomer (monomers E). |

15. The polymer according to claim 14, wherein the monomer A is selected from at least one ester of vinyl alcohol and a C₁ to C₁₀ monocarboxylic acid, C₁ to C₁₀ alkyl acrylate, C₅ to C₁₀ alkyl methacrylate, C₅ to C₁₀ cycloalkyl acrylate and cycloalkyl methacrylate, C₁ to C₁₀ dialkyl maleate and/or C₁ to C₁₀ dialkyl fumarate and the monomer B is selected from at least one vinylaromatic monomer, a C₁ to C₄ alkyl methacrylate and/or an α,β-unsaturated carbonitrile or dicarbonitrile.

16. The polymer according to either of claims 14 or 15, comprising in copolymerized form from 0.001 to 0.09% by weight, based on the total polymer amount, of at least one monomer C.

17. The polymer according to any of claims 14 to 16, comprising in copolymerized form from 0.001 to 0.08% by weight, based on the total polymer amount, of at least one monomer C.

18. The polymer according to any of claims 14 to 17, comprising in copolymerized form from 0.1 to 1% by weight, based on the total polymer amount, of at least one monomer D.

19. The polymer according to any of claims 14 to 18, consisting of particles whose number-average diameter is from 50 to 400 nm.

20. The polymer according to any of claims 14 to 19, having a minimum film-forming temperature ≤ 10°C.

21. An aqueous addition-polymer dispersion, comprising at least one polymer according to any of claims 14 to 20.

## Revendications

1. Masse de revêtement présentant une concentration volumique de pigment ≥70 % et contenant comme liant au moins un polymère, **caractérisée en ce que** ledit au moins un polymère est obtenu par polymérisation en émulsion aqueuse amorcée par voie radicalaire d'un mélange de monomères éthyléniquement insaturés, qui est constitué
| | |
|---|---|
| de 45 à 74,9 % | en poids d'au moins un monomère choisi parmi un ester d'alcool vinylique et d'un acide monocarboxylique en C₁-C₁₀, de l'acrylate d'alkyle en C₁-C₁₀, du méthacrylate d'alkyle en C₅-C₁₀, de l'acrylate et du méthacrylate de cycloalkyle en C₅-C₁₀, du maléinate de dialkyle en C₁-C₁₀ et/ou du fumarate de dialkyle en C₁-C₁₀, dont l'homopolymère présente une température de transition vitreuse <30°C (monomère A), |
| de 25 à 54,9 % | en poids d'au moins un monomère choisi parmi un monomère vinylaromatique, un méthacrylate d'alkyle en C₁-C₄ et/ou un nitrile ou dinitrile d'acide carboxylique |
| | |
|---|---|
| | α,β-insaturé, dont l'homopolymère présente une température de transition vitreuse >50°C (monomère B), |
| de 0,001 à 0,1 % | en poids d'au moins un monomère à action de réticulation comportant au moins deux groupes vinyle non conjugués (monomère C), et éventuellement |
| de 0 à 4 % | en poids d'au moins un monomère contenant des groupes acides (monomère D), ainsi que |
| de 0 à 2 % | en poids d'au moins un autre monomère (monomère E), |
chaque fois par rapport à la quantité totale des monomères éthyléniquement insaturés mis en oeuvre pour la polymérisation.

2. Masse de revêtement suivant la revendication 1, **caractérisée en ce que** le mélange de monomères contient 0,001 à 0,09 % en poids d'au moins un monomère C.

3. Masse de revêtement suivant la revendication 1 ou 2, **caractérisée en ce que** le mélange de monomères contient 0,001 à 0,08 % en poids d'au moins un monomère C.

4. Masse de revêtement suivant l'une des revendications 1 à 3, **caractérisée en ce que** le mélange de monomères contient 0,1 à 1 % en poids d'au moins un monomère D.

5. Masse de revêtement suivant l'une des revendications 1 à 4, **caractérisée en ce que** le polymère est constitué de particules dont le diamètre moyen numérique est de 50 à 400 nm.

6. Masse de revêtement suivant l'une des revendications 1 à 5, **caractérisée en ce que** ledit au moins un polymère présente une température de formation de film minimale ≤10°C.

7. Masse de revêtement suivant l'une des revendications 1 à 6, **caractérisée en ce qu'**elle contient
| | |
|---|---|
| 40 à 94 % en poids | de charges, |
| 2 à 40 % en poids | de pigments, |
| 4 à 30 % en poids | d'au moins un polymère (calculé sous la forme de matière solide) ainsi que |
jusqu'à 10 % en poids d'autres adjuvants courants, chaque fois par rapport à la teneur en matière solide totale de la masse de revêtement.

8. Utilisation d'une masse de revêtement suivant l'une des revendications 1 à 7, comme peinture au latex.

9. Utilisation d'une masse de revêtement suivant l'une des revendications 1 à 7, comme enduit à base de dispersion de matière synthétique.

10. Utilisation d'une masse de revêtement suivant l'une des revendications 1 à 7, comme colle pour carreaux.

11. Utilisation d'une masse de revêtement suivant l'une des revendications 1 à 10, comme peinture au latex.

12. Utilisation d'une masse de revêtement suivant l'une des revendications 1 à 10, comme enduit à base de dispersion de matière synthétique.

13. Utilisation d'une masse de revêtement suivant l'une des revendications 1 à 10, comme colle pour carreaux.

14. Polymère, qui contient à l'état copolymérisé les unités monomères suivantes, chaque fois par rapport à la quantité totale du polymère :
| | |
|---|---|
| 45 à 74,9 % | en poids d'au moins un monomère, dont l'homopolymère présente une température de transition vitreuse <30°C (monomère A), |
| 25 à 54,9 % | en poids d'au moins un monomère, dont l'homopolymère présente une température de transition vitreuse >50°C (monomère B), |
| 0,001 à 0,1 % | en poids d'au moins un monomère à action de réticulation présentant au moins deux groupes vinyle non conjugués (monomère C), et éventuellement |
| 0 à 4 % en poids | d'au moins un monomère contenant des groupes acides (monomère D), ainsi que |
| 0 à 2 % en poids | d'au moins un autre monomère (monomère E). |

15. Polymère suivant la revendication 14, **caractérisé en ce que** le monomère A est choisi parmi au moins un ester d'alcool vinylique et d'un acide monocarboxylique en C₁-C₁₀, de l'acrylate d'alkyle en C₁-C₁₀, du méthacrylate d'alkyle en C₅-C₁₀, de l'acrylate et du méthacrylate de cycloalkyle en C₅-C₁₀, du maléinate de dialkyle en C₁-C₁₀ et/ou du fumarate de dialkyle en C₁-C₁₀ et le monomère B est choisi parmi au moins un monomère vinyl-aromatique, un méthacrylate d'alkyle en C₁-C₄ et/ou un nitrile ou dinitrile d'acide carboxylique α,β-insaturé.

16. Polymère suivant l'une des revendications 14 ou 15, **caractérisé en ce que** le polymère contient à l'état copolymérisé 0,001 à 0,09 % en poids, par rapport à la quantité totale de polymère, d'au moins un monomère C.

17. Polymère suivant l'une des revendications 14 à 16, **caractérisé en ce que** le polymère contient à l'état copolymérisé 0,001 à 0,08 % en poids, par rapport à la quantité totale de polymère, d'au moins un monomère C.

18. Polymère suivant l'une des revendications 14 à 17, **caractérisé en ce que** le polymère contient à l'état copolymérisé 0,1 à 1 % en poids, par rapport à la quantité totale de polymère, d'au moins un monomère D.

19. Polymère suivant l'une des revendications 14 à 18, **caractérisé en ce que** le polymère est constitué de particules dont le diamètre moyen numérique est de 50 à 400 nm.

20. Polymère suivant l'une des revendications 14 à 19, **caractérisé en ce que** le polymère présente une température de formation de film minimale ≤10°C.

21. Dispersion aqueuse de polymère, **caractérisée en ce qu'**elle contient au moins un polymère suivant l'une des revendications 14 à 20.
